Europäisches Patentamt

European Patent Office

Office européen des brevets

(19)

(11) Veröffentlichungsnummer: **0 017 748**
**B1**

(12) # EUROPÄISCHE PATENTSCHRIFT

(45) Veröffentlichungstag der Patentschrift:
09.12.81

(51) Int. Cl.³: **B 23 B 31/12**

(21) Anmeldenummer: **80101126.3**

(22) Anmeldetag: **06.03.80**

(54) **Nachspannendes Bohrfutter.**

(30) Priorität: **14.04.79 DE 7910976 U**

(43) Veröffentlichungstag der Anmeldung:
**29.10.80 Patentblatt 80/22**

(45) Bekanntmachung des Hinweises auf die Patenterteilung:
**09.12.81 Patentblatt 81/49**

(84) Benannte Vertragsstaaten:
**AT CH DE FR GB IT NL SE**

(56) Entgegenhaltungen:
**DE-A-2 341 642**
**DE-C-807 349**
**FR-A-2 145 154**
**GB-A-102 658**
**GB-A-171 993**
**US-A-2 931 660**

(73) Patentinhaber: **Röhm, Günter Horst,**
**Heinrich-Röhm-Strasse 50, D-7927 Sontheim (DE)**

(72) Erfinder: **Röhm, Günter Horst, Heinrich-Röhm-Strasse 50,**
**D-7927 Sontheim (DE)**

(74) Vertreter: **Fay, Hermann, Dipl.-Phys. Dr., Postfach 1767,**
**Ensingerstrasse 21 D-7900 Ulm (Donau) (DE)**

## Nachspannendes Bohrfutter

Die Erfindung betrifft ein nachspannendes Bohrfutter mit einem Futterkörper, einer koaxial zum Futterkörper verdrehbaren, axial über einen Druckring am Futterkörper abgestützten, mit dem Druckring an ihrem rückwärtigen Ende fest verbundenen Spannhülse, ferner mit Spannbacken, die zum Spannen und Lösen durch eine Relativdrehung zwischen dem Futterkörper und der Spannhülse verstellbar sind, und mit einem zwischen dem Futterkörper und der Spannhülse vorgesehenen Klinkengesperre aus einem zur Futterachse koaxialen Zahnkranz einerseits und einer unter Federkraft in den Zahnkranz eingreifenden Zahnklinke anderseits, das den Futterkörper und die Spannhülse gegen Relativdrehungen im Sinne eines Lösens der Spannbacken sperrt, Relativdrehungen im Sinne eines Spannens aber unbehindert lässt, sowie mit einer Einrichtung zum Öffnen des Klinkengesperres von aussen.

Bei einem aus dem DE-U-7 804 747 bekannten Bohrfutter dieser Art befindet sich der Zahnkranz des Klinkengesperres am Druckring, während die Sperrklinke selbst einseitig an einem Haltering gelagert ist, der jenseits des Druckringes auf das Ende des Futterkörpers aufgeklemmt ist. Die Sperrklinke besitzt an ihrem dem Sperrzahn entgegengesetzten Klinkarm einen radial nach aussen durch eine Öffnung des Halteringes vorstehenden Drücker, der von aussen von Hand betätigt werden kann und beim radialen Einwärtsdrücken die Sperrklinke aus ihrem Eingriff am Zahnkranz hebt. Um das Spannfutter öffnen zu können, muss daher dieser Drücker während der Öffnungsbewegung in der einwärts gedrückten Stellung gehalten werden. Durch die für den Drücker vorgesehene Öffnung im Haltering können Verschmutzungen in den die Sperrklinke aufnehmenden freien Ringraum zwischen dem Futterkörper und dem Haltering gelangen. Derartige Verschmutzungen können u.U. die Sperrklinkenfunktion stören. Abgesehen hiervon hängt aber auch die Wirksamkeit des Klinkengesperres von der Festigkeit des Klemmsitzes des Halteringes auf dem Futterkörper ab. Die Sperrklinke selbst ist als Zugklinke ausgebildet und bedarf daher zu ihrer Unterbringung eines nicht unerheblichen Platzaufwandes, nämlich des schon erwähnten Ringraumes zwischen dem Futterkörper einerseits und dem diesen Ringraum mit einem Kragen radial nach aussen anderseits abschliessenden Haltering.

Aus der DE-A 2 341 642 ist ein Bohrfutter bekannt, bei dem zwischen dem Futterkörper und der Spannhülse eine Nachspannfeder wirksam ist, welche die Spannhülse und den Futterkörper im Sinne eines Nachspannens gegeneinander zu verdrehen sucht, so dass die Öffnung des Spannfutters gegen die Kraft der Nachspannfeder erfolgen muss. Die Nachspannfeder ist einerseits gegen den Futterkörper, anderseits gegen einen zum Futterkörper und zur Spannhülse koaxialen drehbaren Ringkäfig abgestützt, der über ein Klinkengesperre mit der Spannhülse verbunden ist. Dazu ist im Ringkäfig eine federbelastete Sperrklinke gelagert, die in einem Zahnkranz an der Spannhülse eingreift. Zum Öffnen des Gesperres dient ein von aussen verdrehbarer Lösering mit einem bei entsprechender Drehstellung des Löseringes die Sperrklinke aus dem Zahnkranz heraushebenden Anschlag. Der Ringkörper ist mit erheblichem Platzaufwand verbunden. Die Sperrung des Spannfutters ist indirekt nur über die Nachspannfeder möglich.

Der Erfindung liegt die Aufgabe zugrunde, ein nachspannendes Bohrfutter der eingangs genannten Art so auszubilden, dass das Klinkengesperre möglichst unmittelbar zwischen dem Futterkörper einerseits und der Spannhülse anderseits wirksam wird, dass die Sperrklinke selbst nur einen möglichst geringen Platzaufwand erfordert und dass das Klinkengesperre zum Lösen des Spannfutters von aussen in einer Weise betätigt werden kann, dass Öffnungen, durch die von aussen Verschmutzungen in das Futterinnere gelangen können, vermieden werden. Darüber hinaus soll die Möglichkeit bestehen, das Klinkengesperre zum Lösen des Spannfutters selbsttätig in der geöffneten Gesperrestellung zu halten und diese Stellung des Klinkengesperres von aussen ohne weiteres erkennen zu können.

Diese Aufgabe wird nach der Erfindung dadurch gelöst, dass der Zahnkranz unmittelbar am Futterkörper angearbeitet und die als Druckklinke ausgebildete Sperrklinke am Druckring gelagert ist, und dass die Einrichtung zum Öffnen des Klinkengesperres aus einem am rückwärtigen Ende der Spannhülse koaxial zur Futterachse von aussen verdrehbaren Lösering gebildet ist, der den Druckring übergreift und einen Anschlag für das dem Sperrzahn entgegengesetzte Sperrklinkenende aufweist.

Der durch die Erfindung erreichte Vorteil besteht im wesentlichen zunächst darin, dass durch die Anordnung des Zahnkranzes unmittelbar am Futterkörper und die Lagerung der Sperrklinke am Druckring die Sperrwirkung des Klinkengesperres direkt zwischen dem Futterkörper und der Spannhülse wirksam wird, da der die Sperrklinke lagernde Druckring mit der Spannhülse regelmässig in einem Drehsinn verschraubt ist, der unter der Sperrkraft des Klinkengesperres nur zu einem festeren Gewindesitz des Druckringes an der Spannhülse führen kann. Jedenfalls werden auf diese Weise die Sperrkräfte des Klinkengesperres formschlüssig, statt wie bei dem vorbekannten Spannfutter über den lediglich am Futterkörper angeklemmten Haltering kraftschlüssig zwischen der Spannhülse und dem Futterkörper übertragen. Ein weiterer wesentlicher Vorteil des erfindungsgemässen Spannfutters ist darin zu sehen, dass das Öffnen des Klinkengesperres, wie es zum Lösen des Spannfutters erforderlich ist, lediglich durch eine Drehbewegung am Lösering erfolgt, so dass dessen Anschlag die Sperrklinke aus ihrem Eingriff am Zahnkranz hebt. Besitzt dann der Lösering gegenüber der Spannhülse eine Reibung, welche die Kraft der die Sperrklinke belastenden Feder ohne Rückdrehung des Löseringes aufzunehmen vermag, bleibt der Lösering in der das Klinkengesperre öffnenden Stellung stehen, braucht also nicht festgehalten zu werden, während das Spannfutter gelöst wird. Durch entsprechende Marken od.dgl. am Lösering und am Spannfutter kann diese Stellung des Löseringes unschwer von aussen auf den ersten Blick sichtbar gemacht werden. Jedenfalls ist es mit Hilfe des erfindungsgemäss vorgesehenen Löseringes möglich, das Klinkengesperre von aussen im Sinne einer Gesperreöffnung zu betätigen, ohne dass das Futter selbst nach aussen hin geöffnet ist, wodurch die Verschmutzungsgefahr des Futterinneren im Bereich des Klinkengesperres vermieden wird. Schliesslich kann durch die Ausbildung der Sperrklinke als Druckklinke ein sehr raumsparender Aufbau verwirklicht werden.

Eine bevorzugte Ausführungsform der Erfindung ist dadurch gekennzeichnet, dass die Sperrklinke unmittelbar in einem Radialschlitz des Druckringes angeordnet und mit ihrer Drehachse beidseits im Druckring gelagert ist. Die Drehachse ist dann nur noch auf Scherung, nicht mehr auf Biegung beansprucht, und die Kraftübertragung von der Sperrklinke auf den Druckring erfolgt symmetrisch. Gleichzeitig ermöglicht diese Anordnung der Sperrklinke innerhalb des Druckringes ausserordentlich günstige Bauabmessungen. Zweckmässig ist der Lösering nur innerhalb eines durch zwei Anschläge begrenzten Drehwinkels verstellbar und sein Anschlag für das Sperrklinkenende durch den axial verlaufenden Rand einer den Eingriff der Sperrklinke in den Zahnkranz freigebenden Ausnehmung in einem Kragenteil des Löseringes gebildet. Der die Ausnehmung aufweisende Kragenteil des Löseringes ist vorzugsweise durch den Kragen eines Halteringes übergriffen, der jenseits des Druckringes und des Löseringes in an sich bekannter Weise am rückwärtigen Endbereich des Futterkörpers befestigt ist. Die Ausnehmung ist dann durch diesen Kragen des Halteringes völlig abgedeckt, so dass Verschmutzungen durch die Ausnehmung nicht eindringen können.

Um die Sperrklinke ohne Schwierigkeiten aus ihrem Eingriff am Zahnkranz heben zu können, wenn das Klinkengesperre geöffnet werden soll, ist nach der Erfindung vorzugsweise weiter vorgesehen, dass bei im Eingriff befindlichem Klinkengesperre die aneinanderliegenden Sperrflächen des Klinkensperrzahnes und des Zahnkranzes in der Tangentialebene am Schwenkkreis des Klinkensperrzahnes um die Klinkenachse liegen. Hinterschneidungen an den aneinanderliegenden Sperrflächen, die das Öffnen des Klinkengesperres erschweren könnten, werden dadurch vermieden. Um im übrigen die schon erwähnte Reibung des Löseringes gegenüber der Spannhülse in einfacher Weise zu erhalten, ist zweckmässig der Lösering in einem Ringfalz der Spannhülse geführt und durch einen eine Reibung ausübenden Dichtring, insbesondere einen O-Ring, gegen die Spannhülse abgeschlossen.

Im folgenden wird die Erfindung an einem in der Zeichnung dargestellten Ausführungsbeispiel näher erläutert; es zeigen:

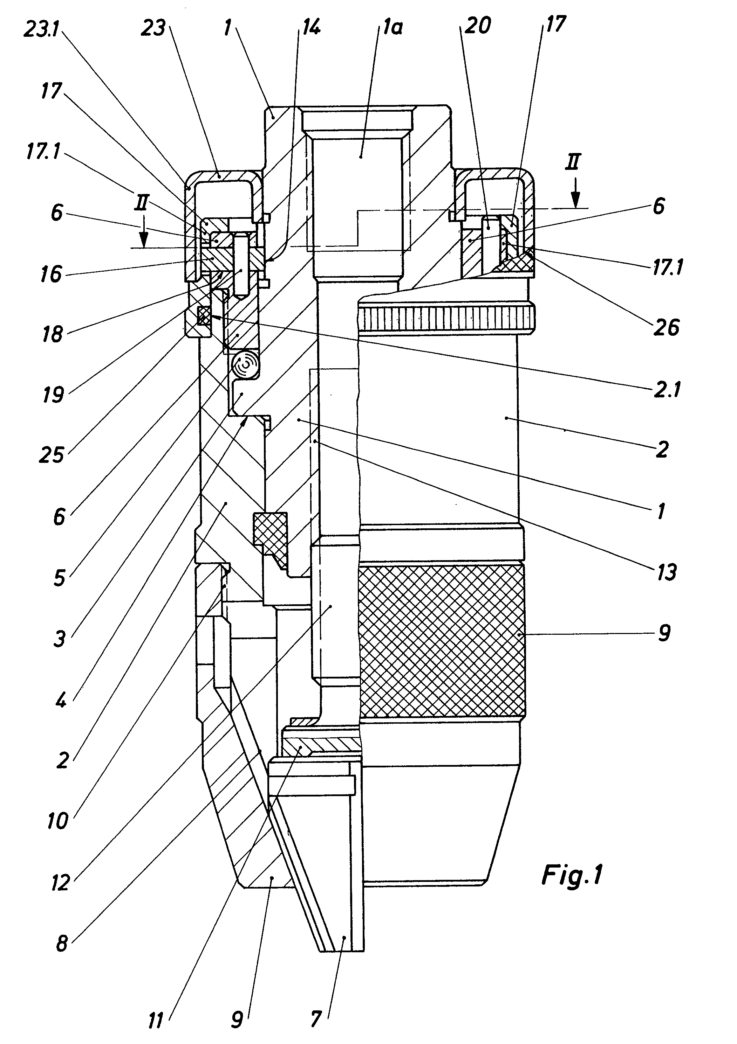

Fig. 1 ein nachspannendes Bohrfutter nach der Erfindung, teils in Seitenansicht, teils in einem achsenparallelen Schnitt,

Fig. 2 einen Querschnitt in Richtung II–II durch das Bohrfutter nach Fig. 1.

In der Zeichnung ist der Futterkörper mit 1 und die daran koaxial und drehbar gelagerte Spannhülse mit 2 bezeichnet. Für die Lagerung der Spannhülse 2 besitzt der Futterkörper 1 einen Ringflansch 3, der axial zwischen einer Ringschulter 4 der Spannhülse 2 einerseits und Wälzkörpern 5 anderseits eingeschlossen ist, die durch einen in die Spannhülse 2 eingeschraubten Druckring 6 gesichert sind. Mit 1a ist eine Gewindeaufnahme im Futterkörper 1 für die nichtdargestellte Bohrspindel bezeichnet. Die Spannbakken 7 sind in Schlitzen 8 der Spannhülse 2 angeordnet und in einer konischen Führung in Form eines Spannkonus 9 verstellbar, der im Ausführungsbeispiel einen Teil der Spannhülse 2 bildet und dazu in einem Gewinde 10 mit der Spannhülse 2 verschraubt ist. Durch die Führung der Spannbacken 7 in den Schlitzen 8 der Spannhülse 2 überträgt sich jedes vom nichtdargestellten Bohrwerkzeug her auf die Spannbacken 7 übertragene Drehmoment entsprechend auf die Spannhülse 2. Nach rückwärts sind im Ausführungsbeispiel die Spannbacken 7 gegen ein Nachspannstück 11 abgestützt, das mit einem Gewindebolzen 12 in einer zentralen Gewindebohrung 13 des Futterkörpers 1 verdrehbar ist. Das Nachspannstück 11 und damit der Gewindebolzen 12 drehen sich somit relativ gegenüber dem Futterkörper 1 in gleicher Weise wie die Spannhülse 2 und die Spannbacken 7. Wird die Spannhülse 2 gegenüber dem Futterkörper 1 verdreht, so erfährt der sich dann entsprechend mitdrehende Gewindebolzen 12 des Nachspannstückes 11 je nach Drehrichtung eine axiale Voroder Rückverstellung, was im ersten Fall ein Spannen, im zweiten Fall ein Lösen der Spannbacken 7 zur Folge hat.

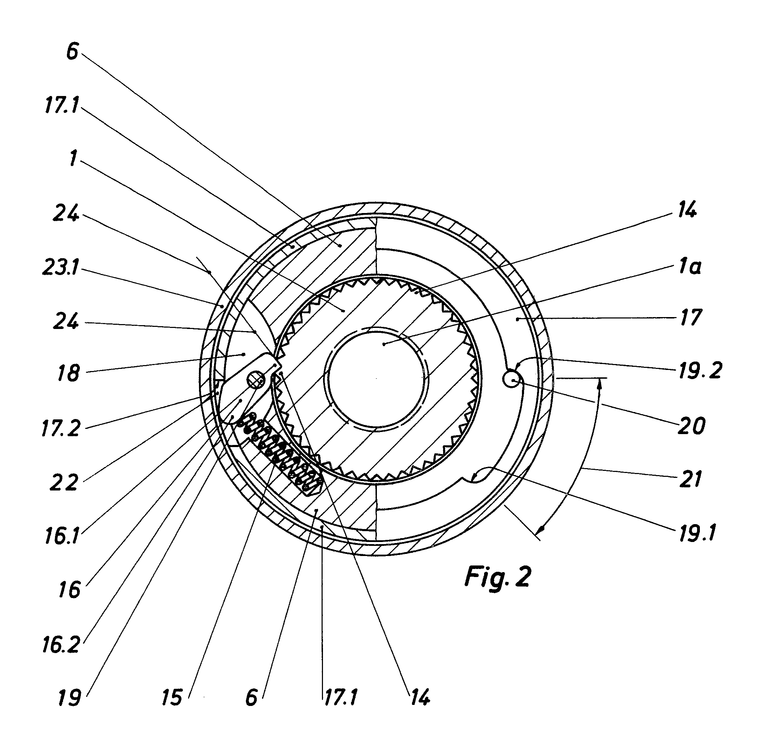

Um bei eingespanntem Werkzeug Verdrehungen zwischen dem Futterkörper 1 und der Spannhülse 2 zu verhindern, die zu einer Lockerung der Einspannung führen könnten, ist zwischen dem Futterkörper 1 und der Spannhülse 2 ein Klinkengesperre vorgesehen, das aus einem zur Futterachse koaxialen Zahnkranz 14 einerseits und einer unter der Kraft einer Feder 15 in den Zahnkranz 14 eingreifenden Sperrklinke 16 anderseits besteht. Dieses Klinkengesperre sperrt im eingegriffenen Zustand den Futterkörper 1 und die Spannhülse 2 gegen Relativdrehungen im Sinne eines Lösens der Spannbacken 7, lässt aber Relativdrehungen im Sinne eines Spannens unbehindert. Dies wird dadurch erreicht, dass der Zahnkranz 14 unmittelbar am Futterkörper 1 angearbeitet und die als Druckklinke ausgebildete Sperrklinke 16 am Druckring 6 gelagert ist, wobei die in einer Bohrung des Druckringes 6 angeordnete, die Sperrklinke 16 in den Zahnkranz 14 drückende Feder 15 als Druckfeder ausgebildet ist und den dem Klinkensperrzahn 16.1 entgegengesetzten Klinkenarm 16.2 belastet. Um zum Lösen des Spannfutters das Klinkengesperre von aussen von Hand öffnen zu können, ist ein am rückwärtigen Ende der Spannhülse 3 koaxial zur Futterachse gelagerter, von aussen verdrehbarer Lösering 17 vorgesehen, der den Druckring 6 mit einem Kragenteil 17.1 übergreift und einen Anschlag 17.2 für das dem Sperrzahn 16.1 entgegengesetzte Sperrklinkenende 16.2 aufweist. Im einzelnen ist die Sperrklinke 16 in einem Radialschlitz 18 des Druckringes 6 angeordnet und mit ihrer Drehachse 19 beidseits im Druckring 6 gelagert. Der Lösering 17 ist nur innerhalb eines durch zwei Anschläge begrenzten Drehwinkels verstellbar, wozu der Druckring 6 einen Anschlagstift 20 aufweist, der an zwei Schultern 19.1, 19.2 des Löseringes 17 zur Anlage kommt, die in Umfangsrichtung des Löseringes 17 um den erwähnten Winkelbereich auseinander liegen. Dieser Winkelbereich ist in Fig. 2 durch den Doppelpfeil 21 angedeutet. Der Lösering 17 befindet sich in der Zeichnung in einer Stellung, die dem im Eingriff befindlichen Zustand des Klinkengesperres entspricht. Wird der Lösering 17 in Fig. 2 gegen den Uhrzeigersinn bis zum Anschlag 19.1 verdreht, drückt der die Klinke 16 betätigende Anschlag 17.2 des Löseringes 17 die Sperrklinke 16 aus ihrem Eingriff am Zahnkranz 14 gegen die Kraft der Feder 15. Dieser Anschlag 17.2 für das Sperrklinkenende 16.2 ist durch den axial verlaufenden Rand einer den Eingriff der Sperrklinke 16 in den Zahnkranz 14 freigebenden Ausnehmung 22 in dem den Druckring 6 übergreifenden Kragenteil 17.1 des Löseringes 17 gebildet. Der diese Ausnehmung 22 aufweisende Kragenteil 17.1 ist durch den Kragen 23.1 eines Halteringes 23 übergriffen, der jenseits des Druckringes 6 und des Löseringes 17 am rückwärtigen Endbereich des Futterkörpers 1 befestigt ist. Der Kragen 23.1 dieses Halteringes 23 deckt die Ausnehmung 22 des Löseringes 17 ab, so dass durch diese Ausnehmung 22 in den Radialschlitz 18 hinein keine die Funktion der Sperrklinke 16 störenden Verschmutzungen gelangen können. Im übrigen ist insbesondere aus Fig. 2 erkennbar, dass bei im Eingriff befindlichem Klinkengesperre die aneinanderliegenden Sperrflächen des Klinkensperrzahnes 16.1 und des Zahnkranzes 14 in der Tangentialebene 24 an dem in der Zeichnung nicht dargestellten Schwenkkreis des Klinkensperrzahnes 16.1 um die Klinkenachse 19 liegen. Der Lösering 17 ist in einem Ringfalz 2.1 der Spannhülse 2 geführt. Er besitzt in diesem Bereich eine Innennut, in die ein Dichtring 25, beispielsweise ein O-Ring, eingelegt ist, der einerseits den Lösering 17 gegen die Spannhülse 2 abdichtet, vor allem aber zwischen dem Lösering 17 und der Spannhülse 2 eine Reibung erzeugt, die ein selbständiges Wandern des Löseringes 17 in Drehrichtung praktisch verhindert und auch ausreicht, den Lösering 17 gegen die Kraft der Feder 15 festzuhalten, so dass der von Hand in die das Klinkengesperre öffnende Stellung gedrehte Lösering 17 in dieser Stellung verbleibt, seinerseits also nicht festgehalten zu werden braucht, während das Spannfutter gelöst wird. Der Dichtring 25 dämpft im übrigen die beispielsweise im Schlagbohrbetrieb auftretenden Schwingungen des Löseringes 17 so weit, dass der Lösering unter dem Einfluss derartiger Schwingungen nicht mehr in der Lage ist, von sich aus die Sperrklinke 16 gegen die Kraft der Feder 15 aus dem Zahnkranz 14 zu lösen. Der Kragen 23.1 des Halteringes 23 greift in einen auf der Aussenseite des Löseringes 17 vorgesehenen Ringfalz 26, so dass im Ergebnis der Lösering 17 zwischen dem Ringfalz 2.1 der Spannhülse 2 und dem Kragen 23.1 des Halteringes 23 axial unverschiebbar geführt ist.

## Patentansprüche

1. Nachspannendes Bohrfutter mit einem Futterkörper (1), einer koaxial zum Futterkörper (1) verdrehbaren, axial über einen Druckring (6) am Futterkörper abgestützten, mit dem Druckring (6) an ihrem rückwärtigen Ende fest verbundenen Spannhülse (2), ferner mit Spannbacken (7), die zum Spannen und Lösen durch eine Relativdrehung zwischen dem Futterkörper (1) und der Spannhülse (2) verstellbar sind, und mit einem zwischen dem Futterkörper (1) und der Spannhülse (2) vorgesehenen Klinkengesperre aus einem zur Futterachse koaxialen Zahnkranz (14) eingreifenden Sperrklinke (16) anderseits, das den Futterkörper (1) und die Spannhülse (2) gegen Relativdrehungen im Sinne eines Lösens der Spannbacken (7) sperrt, Relativdrehungen im Sinne eines Spannens aber unbehindert lässt, sowie mit einer Einrichtung zum Öffnen des Klinkengesperres von aussen, dadurch gekennzeichnet, dass der Zahnkranz (14) unmittelbar am Futterkörper (1) angearbeitet und die als Druckklinke ausgebildete Sperrklinke (16) am Druckring (6) gelagert ist, und dass die Einrichtung zum Öffnen des Klinkengesperres aus einem am rückwärtigen Ende der Spannhülse (2) koaxial zur Futterachse von aussen verdrehbaren Lösering (17) gebildet ist, der den Druckring (6) übergreift und einen Anschlag (17.2) für das dem Sperrzahn (16.1) entgegengesetzte Sperrklinkenende aufweist.

2. Bohrfutter nach Anspruch 1, dadurch gekennzeichnet, dass die Sperrklinke (16) in einem Radialschlitz (18) des Druckringes (6) angeordnet und mit ihrer Drehachse (19) beidseits im Druckring (6) gelagert ist.

3. Bohrfutter nach Anspruch 1 oder 2, dadurch gekennzeichnet, dass der Lösering (17) nur innerhalb eines durch zwei Anschläge (19.1, 19.2) begrenzten Drehwinkels (2) verstellbar ist und sein Anschlag (17.2) für das Sperrklinkenende (16.2) durch den axial verlaufenden Rand einer den Eingriff der Sperrklinke (16) in den Zahnkranz (14) freigebenden Ausnehmung (22) in einem Kragenteil (17.1) des Löseringes (17) gebildet ist.

4. Bohrfutter nach Anspruch 3, dadurch gekennzeichnet, dass der die Ausnehmung (22) aufweisende Kragenteil (17.1) des Löseringes (17) durch den Kragen (23.1) eines Halteringes (23) übergriffen ist, der jenseits des Druckringes (6) und des Löseringes (17) am rückwärtigen Endbereich des Futterkörpers (1) befestigt ist.

5. Bohrfutter nach einem der Ansprüche 1 bis 4, dadurch gekennzeichnet, dass bei im Eingriff befindlichem Klinkengesperre die aneinanderliegenden Sperrflächen des Klinkensperrzahnes (16.1) und des Zahnkranzes (14) in der Tangentialebene (24) am Schwenkkreis des Klinkensperrzahnes (16.1) um die Klinkenachse (19) liegen.

6. Bohrfutter nach einem der Ansprüche 1 bis 5, dadurch gekennzeichnet, dass der Lösering (17) in einem Ringfalz (2.1) der Spannhülse (2) geführt und durch einen eine Reibung ausübenden Dichtring (25) gegen die Spannhülse (2) abgeschlossen ist.

## Claims

1. A re-tightening drilling chuck comprising a chuck body (1), a clamping sleeve (2) which is rotatable coaxially with respect to the chuck body (1) and which is supported against the chuck body axially by way of a pressure ring (6) and which is fixedly connected to the pressure ring (6) at its rearward end, further comprising clamping jaws (7) which are displaceable for the purposes of clamping and release by a relative rotary movement as between the chuck body (1) and the clamping sleeve (2), and further comprising a pawl locking arrangement which is provided between the chuck body (1) and the clamping sleeve (2) and which comprises a toothed ring (14) which is coaxial with respect to the axis of the chuck, on the one hand, and a locking pawl (16) which is spring-loaded into engagement in the toothed ring, on the other hand, for locking the chuck body (1) and the clamping sleeve (2) in respect of relative rotary movements in the direction of release of the clamping jaws (7) while however not impeding relative rotary movements in the direction of clamping, and further comprising a means for opening the pawl locking arrangement from the outside, characterized in that the toothed ring (14) is provided directly on the chuck body (1) and the locking pawl (16) which is in the form of a pressure pawl is mounted on the pressure ring (6), and that the means for opening the pawl locking arrangement is formed from a release ring (17) which is rotatable from the outside at the rearward end of the clamping sleeve (2) coaxially with respect to the chuck axis and which engages over the pressure ring (6) and which has an abutment (17.2) for the end of the locking pawl which is remote from the locking tooth (16.1).

2. A drilling chuck according to claim 1 characterized in that the locking pawl (16) is arranged in a radial slot (18) in the pressure ring (6) and is mounted with both ends of its pivot axis member (19) in the pressure ring (6).

3. A drilling chuck according to claim 1 or claim 2 characterized in that the release ring (17) is displaceable only within an angle (2) of rotary movement which is defined by two abutments (19.1, 19.2) and its abutment (17.2) for the end (16.2) of the locking pawl is formed by the axially extending edge of a recess (22) in a collar portion (17.1) of the release ring (17), which recess (22) releases the engagement of the locking pawl (16) into the toothed ring (14).

4. A drilling chuck according to claim 3 characterized in that the collar portion (23.1) of a holding ring (23) engages over the collar portion (17.1) of the release ring (17), which has the recess (22), which holding ring (23) is secured to the rearward end region of the chuck body (1) on the other side of the pressure ring (6) and the release ring (17).

5. A drilling chuck according to one of claims 1 to 4 characterized in that, when the pawl locking arrangement is in a position of engagement, the abutting locking surfaces of the pawl locking tooth (16.1) and the toothed ring (14) lie in the plane (24) tangential to the circle of pivotal movement of the pawl locking tooth (16.1) about the pawl axis member (19).

6. A drilling chuck according to one of claims 1 to 5 characterized in that release ring (17) is guided in an annular groove (2.1) in the clamping sleeve (2) and is sealed off with respect to the clamping sleeve (2) by a sealing ring (25) which has a frictional effect.

## Revendications

1. Mandrin porte-outil, avec postserrage de l'outil, notamment pour outil de perçage, ce mandrin comportant un corps (1), un manchon de serrage (2) qui est monté de façon à pouvoir être tourné coaxialement au corps (1) sur lequel il prend appui axialement par l'intermédiare d'une bague d'appui (6) à laquelle l'extrémité arrière de ce manchon (2) est liée, des mâchoires de serrage qui, pour le serrage et le desserrage, sont manœuvrables par un mouvement de rotation relative entre manchon (2) et corps (1), et un mécanisme d'encliquetage qui est prévu entre corps (1) et manchon (2) et qui comporte un cliquet (16) attaquant une couronne dentée (14) coaxiale à l'axe du mandrin, ce mécanisme d'encliquetage empêche les mouvements de rotation relatifs entre corps (1) et manchon (2) dans le sens d'un desserrage des mâchoires (7) mais autorisant de tels mouvements dans le sens du serrage, et des moyens pour provoquer de l'extérieur l'ouverture du mécanisme d'encliquetage, ce mandrin étant caractérisé par le fait que la couronne dentée (14) est aménagée ou usinée directement sur le corps (1), par le fait que le cliquet (16) est un cliquet poussé qui est monté sur la bague d'appui (6), et par le fait que les moyens pour provoquer l'ouverture du mécanisme d'encliquetage sont cons-

tités par une bague de déblocage (17) qui est située à l'extrémité arrière du manchon et qui peut être déplacée, depuis l'extérieur, selon un mouvement de rotation coaxiale à l'axe mandrin, cette bague de déblocage (17) recouvrant la bague d'appui (6) et comportant une butée (17.2) pour l'extrémité du cliquet opposée à la dent d'arrête (16.1) de ce cliquet.

2. Mandrin selon la revendication 1, caractérisé par le fait que le cliquet (16) est agencé dans une fente radiale (18) de la bague d'appui (6) et tourillonne bilatéralement, par son axe de rotation (19), dans la bague d'appui (6).

3. Mandrin selon la revendication 1 ou 2, caractérisé par le fait que la bague de déblocage (17) n'est manœuvrable qu'à l'intérieur d'une plage angulaire (21) limitée par deux butées (19.1, 19.2) et par le fait que la butée (17.2) que cette bague comporte pour agir sur l'extrémité (16.2) du cliquet est constituée par le bord, dirigé axialement, d'un évidement (22) autorisant le cliquet (16) à se mettre en prise dans la couronne dentée (14), cet évidement étant formé dans une partie en forme de collerette (17.1) de la bague de déblocage (17).

4. Mandrin selon la revendication 3, caractérisé par le fait que la partie en forme de collerette (17.1) de la bague de déblocage (17) est recouverte par la collerette (23.1) d'une bague de retenue (23) qui est fixée à la région de l'extrémité arrière du corps (1) du mandrin, au-delà de la bague d'appui (6) et de la bague de déblocage (17).

5. Mandrin selon l'une quelconque des revendications 1 à 4, caractérisé par le fait que, lorsque le mécanisme d'encliquetage est en prise, les surfaces en contact mutuel de la dent d'arrêt (16.1) du cliquet et de la couronne dentée (14) se trouvent dans le plan (24) tangent au cercle de pivotement de la dent d'arrêt (16.1) autour de l'axe (19) du cliquet.

6. Mandrin selon l'une quelconque des revendications 1 à 5, caractérisé par le fait que la bague de déblocage (17) est guidée dans une feuillure annulaire (2.1) du manchon de serrage (2), et l'interface manchon/bague (2/17) est fermé par un anneau d'étanchété exerçant un frottement.

Fig.1

Fig. 2